# EUROPÄISCHE PATENTANMELDUNG

(11) **EP 0 837 577 A2**
(43) Veröffentlichungstag der Anmeldung: **22.04.1998**
(21) Anmeldenummer: 97401524.0
(22) Anmeldetag: 26.06.1997
(51) Int. Cl.: H04L 1/00

(54) **System und Verfahren zur digitalen Datenübertragung**

(30) Priorität: 28.06.1996 DE 19626132
(71) Anmelder: ALCATEL ALSTHOM COMPAGNIE GENERALE D'ELECTRICITE, 75008 Paris (FR)
(72) Erfinder: Buné, Paul, A.M., 70806 Kornwestheim (DE)
(74) Vertreter: Knecht, Ulrich Karl, Dipl.-Ing.

(57) **Zusammenfassung**

Die Erfindung betrifft ein System und ein Verfahren zur Übertragung digitaler Daten, die in Rahmen strukturiert sind. In herkömmlichen Übertragungssystemen, bei denen fehlerhafte Rahmen wiederholt werden, kann der Empfänger einem fehlerhaften Rahmen dessen Rahmennummer nicht entnehmen. In komplexen Übertragungssystemen, etwa nach dem GSM-Standard, ist es deswegen nicht möglich, zur Reduzierung der Rahmen-Wiederholungen einen Majoritätsvergleich fehlerhafter Rahmen durchzuführen. Im erfindungsgemäßen Übertragungssystem haben die übertragenen Rahmen eine Struktur, die es ermöglicht, die Fehlerprüfung für die Rahmennummer und die Fehlerprüfung für die Nutzdaten getrennt durchzuführen. Dadurch kann in den meisten Fällen auch bei fehlerhaften Nutzdaten die Rahmennummer zuverlässig ermittelt werden.

## Beschreibung

Die Erfindung bezieht sich auf digitale Übertragungssysteme, bei denen die zu übertragenden digitalen Daten in Rahmen strukturiert sind. Insbesondere bezieht sich die Erfindung auf solche Übertragungssysteme, bei denen fehlerhaft übertragene Rahmen wiederholt gesendet werden können. Die Erfindung bezieht sich außerdem auf ein Übertragungsverfahren, welches zur Ausführung in einem derartigen Übertragungssystem bestimmt ist, sowie auf einen Sender und einen Empfänger für eine solches Übertragungssystem.

Es ist bekannt, bei der Übertragung digitaler Daten die Daten in Rahmen mit einer bestimmten Struktur anzuordnen. Unter digitalen Daten werden im allgemeinen Zeichen oder Folgen von Zeichen aus einem endlichen Zeichenvorrat verstanden. Meist handelt es sich dabei um binäre Daten, bei denen der Zeichenvorrat nur aus der logischen Null und der logischen Eins besteht. Digitale Daten werden z. B. von digitalen Datenverarbeitungsgeräten erzeugt oder entstehen bei der Digitalisierung von Bild- und Sprachsignalen. Nutzdaten sind solche digitalen Daten, deren Übermittlung bei einer Kommunikation im Vordergrund steht. Üblicherweise sind in Rahmen nicht nur für Nutzdaten, sondern auch für zusätzliche Daten Bereiche vorgesehen. Diese zusätzlichen Daten dienen z. B. dem Aufund Abbau oder der Überwachung der Verbindung zwischen den kommunizierenden Teilnehmern. Welche Daten dies im einzelnen sind, richtet sich u. a. nach den verwendeten Modulations- und Kodierungsverfahren, der Zahl der tolerierbaren Übertragungsfehler und vermittlungstechnischen Vorgaben.

Ein konkretes Beispiel für eine solche Rahmenstruktur wird in "The GSM System for Mobile Communications", Seite 281 ff., von M. Mouly und M.-B. Pautet erläutert. Die dort beschriebene Rahmenstruktur findet in Mobilfunksystemen nach dem GSM-Standard ("Global System for Mobile Communications") Verwendung. GSM-Mobilfunksysteme sind Zeitmultiplex-Systeme (TDMA-Systems), d. h. jeder Rahmen wird in eine Anzahl gleichlanger Teilrahmen (Zeitschlitze, "time slots") unterteilt. Es soll hier, wie häufig üblich, aus Gründen der Übersichtlichkeit ein solcher Teilrahmen vereinfacht weiterhin als "Rahmen" bezeichnet werden. Das im GSM-Standard definierte Funkverbindungsprotokoll (RLP, "Radio Link Protocol") sieht Rahmen vor, von denen jeder eine Länge von 240 Bits hat und u. a. eine 16 Bits umfassende Prüfsequenz enthält. Der Empfänger eines solchen Rahmens wertet diese Prüfsequenz aus und kann damit feststellen, ob der Rahmen als ganzer fehlerfrei übertragen worden ist. Jeder RLP-Rahmen enthält außerdem eine Rahmennummer, die Werte zwischen 0 und 63 annehmen kann. Zur Angabe der Rahmennummer stehen in RLP-Rahmen 8 Bits zur Verfügung.

Wenn das GSM-Übertragungssystem im Bestätigungsmodus ("acknowledged mode") ist, sendet der Empfänger dem Sender eine Bestätigung für jeden fehlerfrei empfangenen Rahmen. Bei dieser Bestätigung wird dem Sender nicht die Nummer des fehlerfrei empfangenen, sondern die des als nächsten erwarteten Rahmens mitgeteilt. Falls beim Sender keine Bestätigung über den fehlerfreien Empfang eines Rahmens eingeht, wiederholt er die Aussendung des Rahmens. Die Zahl der möglichen Wiederholungen ist begrenzt, damit bei zusammengebrochenem Übertragungsweg keine Endlos-Schleife entsteht. Bei stark gestörten Kanälen kann jedoch die Zahl der Wiederholungen sehr hoch sein mit der Folge, daß die effektive Nutzdaten-Übertragungsrate deutlich abfällt.

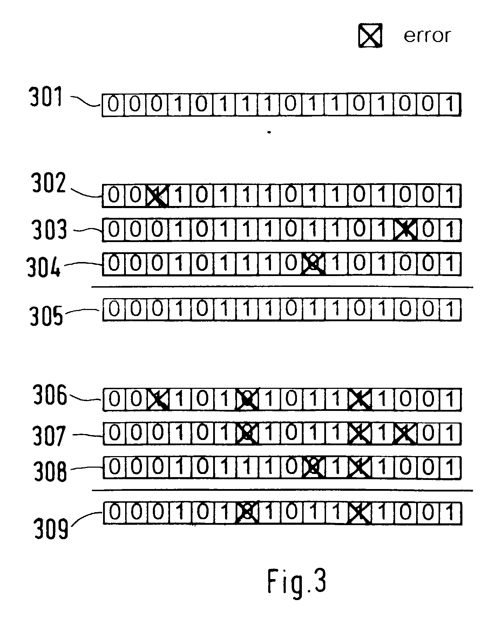

Um diesem Abfallen der Nutzdaten-Übertragungsrate entgegenzuwirken, kann auf ein Verfahren zurückgegriffen werden, bei dessen Ausführung ein Majoritätsvergleich durchgeführt wird. Die Grundidee dieses Verfahrens ist in der veröffentlichten internationalen Patentanmeldung WO 92/21085 beschrieben: Wenn der Empfänger einen Rahmen als fehlerhaft erkennt, so verwirft er diesen Rahmen nicht, sondern speichert ihn ab. Außerdem fordert der Empfänger beim Sender eine Wiederholung des fehlerhaft empfangenen Rahmens an. Wenn der Speicher eine bestimmte Anzahl fehlerhafter Rahmen enthält, so werden diese Rahmen ausgelesen und einem Majoritätsvergleich unterworfen. Bei diesem Majoritätsvergleich werden die Rahmen bitweise miteinander verglichen, wie dies in Fig. 3 dargestellt ist. Aus den fehlerhaft übertragenen Rahmen 302, 303, 304 wird ein neuer Rahmen 305 dadurch bestimmt, daß für jedes einzelne Bit eine Mehrheitsentscheidung durchgeführt wird. Bei nicht zu großer Fehlerhäufigkeit stimmt, wie in diesem ersten Beispiel, der neue Rahmen 305 mit dem gesendeten, nicht durch Fehler beeinträchtigten Rahmen 301 überein. Die in Fig. 3 unten dargestellten Rahmen 306, 307, 308 enthalten mehr Fehler als die Rahmen 302, 303, 304. Dadurch werden in diesem zweiten Beispiel nicht alle Bits des neuen Rahmens 309 korrekt bestimmt. Ob der Majoritätsvergleich zu einem fehlerfreien neuen Rahmen geführt hat oder nicht, wird durch den gleichen Fehlerprüfungsalgorithmus festgestellt, wie er auch auf unmittelbar empfangene Rahmen angewendet wird. Ergibt die Fehlerprüfung, das der neu ermittelte Rahmen fehlerfrei ist, so wird dies dem Sender mitgeteilt; eine wiederholte Übertragung des Rahmens entfällt in diesem Fall. Auf diese Weise ist es im Extremfall sogar möglich, eine fehlerfreie Datenübertragung zu gewährleisten, ohne daß dabei ein einziger Rahmen tatsächlich fehlerfrei übertragen worden wäre.

Die o. a. internationale Patentanmeldung bezieht sich auf ein relativ einfaches Datenflußsteuerungsprotokoll, welches z. B. nicht zuläßt, daß ein Rahmen übertragen wird, bevor der erfolgreiche Empfang des vorhergehenden Rahmens bestätigt ist. Ein derartiges Vorgehen ist nur sinnvoll, wenn die Anforderungen an den Datendurchsatz gering sind. Bei modernen digitalen Funkübertragungssystemen, wie z. B. nach dem GSM-Standard, sind die Anforderungen an den Datendurchsatz, aber auch an den Datenschutz wesentlich höher. Daher kommen hier kompliziertere Datenflußsteuerungsprotokolle zur Anwendung. Wird das oben erläuterte Verfahren z. B. auf Datenrahmen angewandt, wie sie durch das RLP-Protokoll festgelegt sind, so ist entscheidend, bei der Durchführung des Majoritätsvergleichs nur Rahmen gleicher Rahmennummer miteinander zu vergleichen. Dies setzt voraus, daß sich auch die Rahmennummern fehlerhaft übertragener Rahmen zuverlässig ermitteln lassen. Die Rahmennummer eines fehlerhaften Rahmens kann jedoch selbst fehlerhaft sein. Denkbar wäre, die Rahmennummer eines als fehlerhaft erkannten Rahmens aus der Abfolge der fehlerfrei empfangenen Rahmen zu bestimmen. Dies setzt jedoch, sofern überhaupt möglich, einen erheblichen Rechenaufwand auf der Empfängerseite voraus. Beim GSM-Standard liegt dies u. a. am zeitlichen Versatz zwischen Sender und Empfänger: Der Sender, der einen Rahmen mit der Rahmennummer n gesendet hat, wartet mit der Aussendung des Rahmens n+1 nicht auf die Bestätigung, daß der zuerst gesendete Rahmen n fehlerfrei empfangen worden ist. Vielmehr sendet der Sender bis zum Eintreffen der Bestätigung eine größere Zdhi weiterer Rahmen. Bei GSM-Übertragung mit voller Übertragungsrate ("full rate") sind dies etwa 9 Rahmen, bei Übertragung mit halber Übertragungsrate ("half rate") etwa 14 Rahmen. Erschwerend kommt außerdem hinzu, daß dieser Versatz nicht konstant ist, sondern zeitlichen Schwankungen unterliegt. Bei stark gestörtem Empfang ist der Empfänger somit u. U. darauf angewiesen, von Beginn der Übertragung an die gesamte Abfolge von Rahmennummern und Bestätigungen zu verfolgen, zu speichern und zu verarbeiten, um die Rahmennummern fehlerhafter Rahmen zuverlässig zu ermitteln. Dies erfordert im Empfänger eine erhebliche Rechen- und Speicherleistung. Wenn keine derartige Rechen- und Speicherleistung zu Verfügung gestellt wird oder wenn die Häufigkeit der Störungen, insbesondere auf dem Rückmeldekanal vom Empfänger zum Sender, ein gewisses Maß übersteigt, so ist eine zuverlässige Bestimmung von Nummern fehlerhafter Rahmen nicht möglich.

Es ist daher Aufgabe der Erfindung, die zuverlässige Bestimmung von Rahmennummern fehlerhaft empfangener Rahmen zu verbessern, ohne die Empfänger mit aufwendigen Rechen- und Speichereinrichtung ausstatten zu müssen.

Gelöst wird diese Aufgabe dadurch, daß in dem erfindungsgemäßen Übertragungssystem Rahmen übertragen werden, die die in Anspruch 1 angegebene Struktur aufweisen. Ein für das erfindungsgemäße Übertragungssystem geeigneter Sender ist Gegenstand des Anspruchs 4, ein geeigneter Empfänger ist Gegenstand des Anspruchs 6, ein erfindungsgemäßes Übertragungsverfahren Gegenstand des Anspruchs 12. Vorteilhafte Weiterbildungen sind jeweils den Unteransprüchen entnehmbar.

Wesentlich für die Erfindung ist die Aufteilung der Fehlerprüfung in eine Fehlerprüfung für die Rahmennummer und eine separate Fehlerprüfung für andere Daten, insbesondere Nutzdaten. Damit ist es möglich, auch bei fehlerhaft empfangenen Nutzdaten den Rahmen in den meisten Fällen in einem Majoritätsvergleich auszuwerten.

Die erfindungsgemäße Rahmenstruktur ist auch dann vorteilhaft einsetzbar, wenn kein Majoritätsvergleich durchgeführt werden soll. Falls die Rahmennummer fehlerfrei ist, kann der Empfänger dem Sender genau mitteilen, welchen Rahmen er wiederholen soll. Dadurch läßt sich verhindern, daß der Sender Rahmen öfter als notwendig wiederholt. Dies wird im einzelnen an späterer Stelle erläutert.

Die Erfindung wird nachfolgend anhand der Zeichnungen ausführlich beschrieben. Es zeigen:
- Fig. 1:: Ein Übertragungssystem und eine Rahmenstruktur gemäß der vorliegenden Erfindung;
- Fig. 2:: Eine Rahmenstruktur nach dem Stand der Technik;
- Fig. 3:: Eine schematische Darstellung, wie beim Majoritätsvergleich aus fehlerhaften Rahmen gleicher Rahmennummer ein neuer Rahmen ermittelt wird;
- Fig. 4:: Ein Flußdiagramm für ein erfindungsgemäßes Übertragungsverfahren.

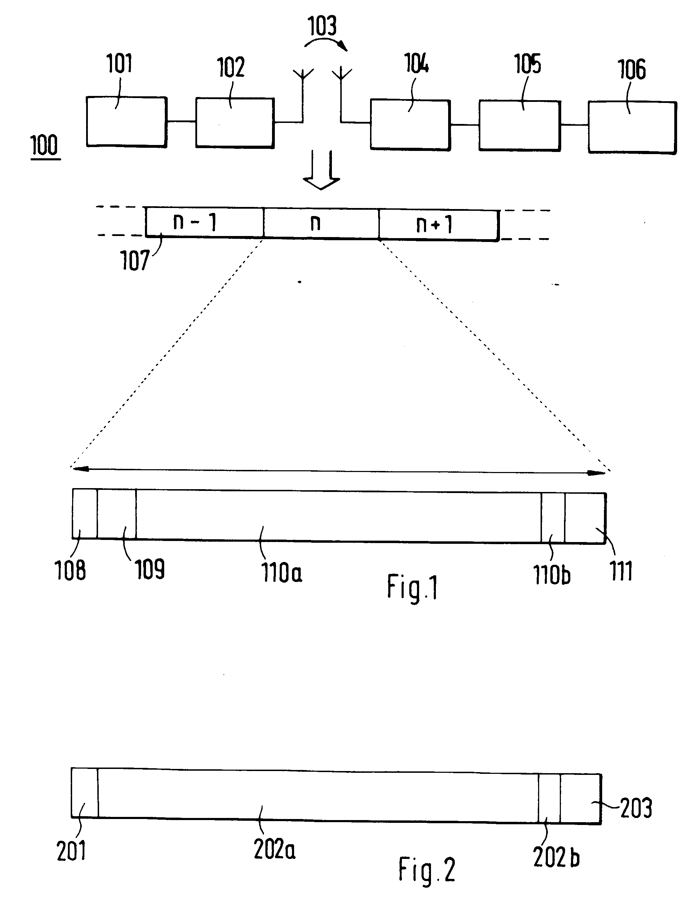

In Fig. 1 ist oben schematisch ein erfindungsgemäßes Übertragungssystem dargestellt. In der Datenquelle 101 werden digitale Daten erzeugt. Wie bereits erwähnt, kann es sich bei dieser Datenquelle z. B. um eine Binärdaten erzeugende elektronische Datenverarbeitungsanlage oder ein Faksimile-Gerät handeln. In einem Sender 102 sind, je nach Anwendung, Vorrichtungen zur Quell- und/oder Kanalcodierung sowie zur Leitungscodierung vorhanden. Im Sender 102 können auch Vorrichtungen vorhanden sein, die der Durchführung eines oder mehrerer der bekannten Multiplex-Verfahren dienen. Durch das Bezugszeichen 103 ist der Übertragungsweg symbolisiert, der in diesem Ausführungsbeispiel eine nicht leitungsgebundene Übertragung durch elektromagnetische Wellen beinhaltet. In einem Empfänger 104 wird das übertragene Signal in digitale Daten zurückverwandelt und in entsprechenden Einrichtungen dekodiert. Normalerweise in den Empfänger integriert, hier aber aus Gründen der Übersicht separat dargestellt, ist die Fehlerkontroll-Einheit 105. Auf die dort ablaufenden Vorgänge wird unten näher eingegangen. Nutzdaten, die in der Fehlerkontroll-Einheit als fehlerfrei erkannt worden sind, gelangen zur Datensenke 106.

Auf dem Übertragungsweg zwischen Sender 102 und Empfänger 104 sind die Daten in Rahmen 107 strukturiert, wie dies bereits in der Beschreibungseinleitung beschrieben worden ist. Die Rahmen 107 in Fig. 1 sind jeweils mit einer Rahmennummer gekennzeichnet. Darunter abgebildet ist die Struktur der bei der Übertragung verwendeten Rahmen. In dieser Rahmenstruktur ist das Feld 110a für Nutzdaten vorgesehen. Eventuell sind in einem weiteren Feld 110b Bits für zusätzliche Daten enthalten, z. B. für die Synchronisierung oder den Verbindungsauf- und abbau. Diese Bits für zusätzliche Daten werden im folgenden als Signalisierungsbits bezeichnet. Das Feld 111 besteht aus einer Prüfsequenz, mit der geprüft werden kann, ob die in den Bereichen 110a und 110b enthaltenen Bits fehlerfrei empfangen worden sind. Das Feld 108 enthält Bits für die Rahmennummer, das Feld 109 eine Prüfsequenz, mit der geprüft werden kann, ob die Rahmennummer fehlerfrei empfangen worden ist. Im beschriebenen Ausführungsbeispiel beträgt die Länge der Rahmen 240 Bits, das Rahmennummern-Feld 108 ist 8 Bits lang, für die Prüf-Felder 109 und 111 sind jeweils 16 Bits vorgesehen. Die übrigen Bits sind für Nutzdaten 110a und Signalisierungsdaten 110b reserviert.

Die Vorteile der erfindungsgemäßen Rahmenstruktur werden in einem Vergleich mit einer Rahmenstruktur nach dem Stand der Technik deutlich. In Fig. 2 ist eine solche herkömmliche Rahmenstruktur skizziert. Nutzdaten und Signalisierungs-Bits sind in den Feldern 202a bzw. 202b enthalten, für die Rahmennummer ist das Feld 201 vorgesehen. Die Prüfsequenz in Feld 203 erlaubt die Prüfung, ob eines oder mehrere der in den Feldern 201, 202a und 202b enthaltenen Bits fehlerhaft ist. Die Fehler-Prüfung erstreckt sich also beim Stand der Technik auf alle in einem Rahmen angeordneten Bits. Eine Unterscheidung, ob Bits in Feld 201 oder in Feld 202a oder in Feld 202b fehlerhaft übertragen worden sind, ist dort nicht möglich. Falls ein Fehler festgestellt wird, kann bei keinem der im Rahmen enthaltenen Bits angenommen werden, daß es fehlerfrei empfangen worden ist. Somit ist auch die Rahmennummer nicht zuverlässig aus den entsprechenden Bits in Feld 201 bestimmbar. Dies hat u. a. zur Folge, daß etwa bei herkömmlichen GSM-Übertragungssystemen eine Verwertung eines fehlerhaften Rahmens zum Zwecke eines Majoritätsvergleichs nicht möglich ist.

Bei der erfindungsgemäßen Rahmenstruktur hingegen wird die Fehlerkontrolle für die Nutz- und Signalisierungsbits einerseits und die Rahmennummer andererseits getrennt durchgeführt. Selbst bei fehlerhaften Nutz- oder Signalisierungsbits kann dadurch festgestellt werden, ob zumindest die Rahmennummer fehlerfrei empfangen worden ist. Eine solche Feststellung ist sinnvoll, da die Wahrscheinlichkeit groß ist, daß trotz Fehlern in den Nutz- und/oder Signalisierungsdaten die Rahmennummer fehlerfrei empfangen wurde. Dies folgt aus der Tatsache, daß ein Fehler in der Rahmennummer statistisch wesentlich seltener auftritt als ein Fehler in den Nutzdaten. Wenn man davon ausgeht, daß jedes Bit in einem Rahmen die gleiche Fehlerwahrscheinlichkeit hat, so ist das Verhältnis zwischen der Wahrscheinlichkeit, daß ein Fehler in der Rahmennummer auftritt, und der Wahrscheinlichkeit, daß ein Fehler in den übrigen Bits auftritt, gleich dem Verhältnis zwischen der Zahl der Rahmennummer-Bits zur Zahl der übrigen Bits. Für RLP-Rahmen liegt dieses Verhältnis bei etwa 0.033, oder anders ausgedrückt: ein Fehler in der Rahmennummer tritt 30 mal seltener auf als ein Fehler in den übrigen Bits. Von 30 Rahmen mit fehlerhaften Nutz- oder Signalisierungsdaten haben demnach im Mittel 29 Rahmen eine fehlerfrei übertragene Rahmennummer. Bei GSM-Übertragungsverfahren, die von der herkömmlichen, oben geschilderten Rahmenstruktur Gebrauch machen, kann keiner dieser 30 Rahmen einem Majoritätsvergleich zugeführt werden. Bei Verwendung der erfindungsgemäßen Rahmenstruktur können dagegen im Mittel 29 dieser Rahmen in einem Majoritätsvergleich weiterverarbeitet werden.

Die gleichen Überlegungen gelten auch, wenn das Übertragungssystem die Durchführung fehlerkorrigierender Maßnahmen vorsieht. Mit Hilfe solcher Maßnahmen ist es möglich, selbst dann, wenn Bits fehlerhaft empfangen worden sind, diese Bits zu korrigieren und einen fehlerfreien Rahmen zu erzeugen. Die Fehlerkorrektur erfordert in der Rahmenstruktur ein zusätzliches Feld für Korrekturbits. Bei vorgegebener Anzahl von Korrekturbits können jedoch nicht beliebig viele Fehler korrigiert werden. Im Falle ungünstiger Kanaleigenschaften kommt es somit auch hier zu dem oben geschilderten Problem, daß Fehler in Rahmen auftreten und sich die Rahmennummer des fehlerhaften Rahmens nicht zuverlässig ermitteln läßt. Die erfindungsgemäße Rahmenstruktur schafft hier ebenfalls in der oben geschilderten Weise Abhilfe.

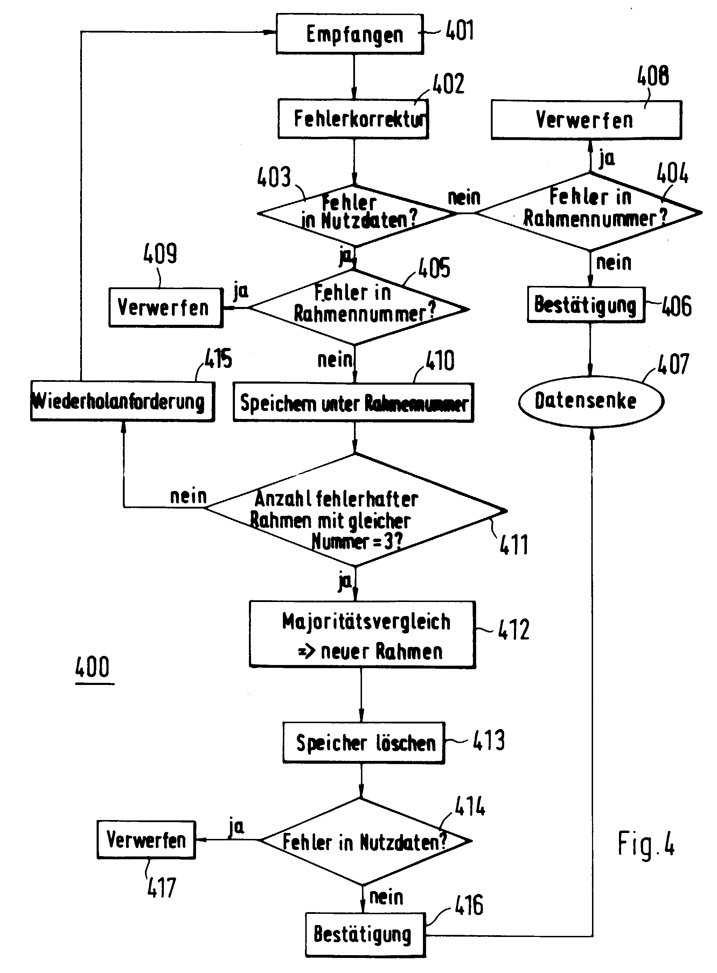

Im folgenden wird ein Ausführungsbeispiel für ein erfindungsgemäßes Übertragungsverfahren erläutert. Fig. 4 zeigt in Form eines Flußdiagramms, welche Schritte auf der Empfängerseite durchgeführt werden. Aus Gründen der Übersichtlichkeit sind im Flußdiagramm nicht alle nachfolgend beschriebenen Schritte aufgeführt. In Klammern gesetzte Bezugszeichen verweisen im folgenden auf die einzelnen Schritte im Flußdiagramm. Ein Sender strukturiert die zu übertragenden digitalen Daten in Rahmen. Jeder Rahmen enthält Nutzdaten, eventuell Signalisierungsdaten, eine Rahmennummer, Korrekturbits, Prüfbits für die Fehlerprüfung der Nutz- und Signalisierungsdaten sowie separate Prüfbits für die Fehlerprüfung der Rahmennummer. Der Empfänger empfängt (401) die Rahmen und führt unter Verwendung der Korrektur-Bits eine Fehlerkorrektur der Rahmen durch (402). Für diese Fehlerkorrektur gibt es zwei Möglichkeiten: Zum einen kann sich, wie etwa bei gegenwärtigen GSM-Systemen, die Fehlerkorrektur auf den gesamten Rahmen erstrecken. Die Gesamtfehlerzahl im Rahmen entscheidet dann darüber, ob die Fehlerkorrektur zu einem fehlerfreien Rahmen führt oder nicht. Alternativ dazu können zwei voneinander unabhängige Fehlerkorrekturen durchgeführt werden: eine Korrektur der für den Majoritätsvergleich wichtigen Rahmennummer und eine Korrektur der übrigen im Rahmen enthaltenen Bits. Zwar erfordert diese Alternativlösung zusätzliche Korrekturbits für die Rahmennummer in der Rahmenstruktur, dafür kann jedoch die Zahl der zu verwerfenden Rahmen reduziert werden. Welche der beiden dargestellten Möglichkeiten zur Fehlerkorrektur vorzuziehen ist, muß im Einzelfall im Lichte der gesamten Systemkonfiguration beurteilt werden.

Im Anschluß an die Fehlerkorrektur überprüft der Empfänger jeden einzelnen Rahmen daraufhin, ob noch Fehler in den Nutz- oder den Signalisierungsdaten vorhanden sind (403). In einer zweiten Prüfstufe überprüft der Empfänger, ob auch die Rahmennummer fehlerfrei empfangen worden ist (404, 405). Es sind nun vier Fälle zu unterscheiden:
a) Sowohl die Nutz- und Signalisierungsdaten als auch die Rahmennummer sind fehlerfrei. Der Empfänger leitet den Rahmen an die Datensenke (407) weiter und teilt dem Sender den fehlerfreien Empfang des Rahmens mit (406).
b) Sowohl die Nutz- und Signalisierungdaten als auch die Rahmennummer ist fehlerhaft. In diesem Fall wird der Rahmen verworfen (409).
c) Die Nutz- und Signalisierungdaten sind fehlerfrei, die Rahmennummer ist jedoch fehlerhaft. Der Rahmen wird verworfen (408). Dieser Fall tritt statistisch nur selten auf.
d) Die Nutz- und Signalisierungsdaten sind fehlerhaft, die Rahmennummer ist jedoch fehlerfrei. In diesem häufiger auftretendem Fall speichert der Empfänger den Rahmen ab (410) und fordert beim Sender diesen fehlerhaften Rahmen erneut an (415). Dazu wird erfindungsgemäß die betreffende Rahmennummer unmittelbar dem Sender übermittelt und nicht, wie beim Stand der Technik, die als nächste erwartete Rahmennummer. Dies erleichtert dem Sender die Übersicht, welche Rahmen noch zu übertragen und welche zu wiederholen sind. Ist der Kanal stark gestört, so steigt die Wahrscheinlichkeit, daß auch bei Wiederholungen von Rahmen Fehler auftreten. Somit kommt es häufig dazu, daß drei übertragene Rahmen mit gleicher Rahmennummer fehlerhafte Nutz- oder Signalisierungsdaten haben.

Falls zwei derartige Rahmen abgespeichert sind und ein dritter fehlerhafter Rahmen gleicher Rahmennummer empfangen wird, so führt der Empfänger einen Majoritätsvergleich durch (412), wie dies in der o. a. Patentschrift detailliert dargestellt ist. Alternativ können auch mehr als 3 Rahmen gespeichert und miteinander verglichen werden. Das Ergebnis dieses Majoritätsvergleichs ist ein neuer Rahmen. Der Speicher wird gelöscht (413) und der neue Rahmen daraufhin überprüft, ob die Nutz- und Signalisierungsdaten fehlerfrei sind (414). Bei Fehlerfreiheit wird dieser neue Rahmen der Datensenke (407) zugeführt und dies dem Sender bestätigt (416).

Ist auch der neue Rahmen fehlerhaft, so verwirft der Empfänger den Rahmen (417) und fordert beim Sender eine Wiederholung des Rahmens der betreffenden Rahmennummer an (in Fig. 4 nicht dargestellt). Die Prozedur kann nun erneut beginnen (in Fig. 4 nicht dargestellt).

Die erfindungsgemäße Rahmenstruktur kann auch dann vorteilhaft eingesetzt werden, wenn die Durchführung eines Majoritätsvergleichs nicht vorgesehen ist. In diesem Fall ist es dem Empfänger in vielen Fällen möglich, Rahmen mit fehlerhaften Nutz- oder Signalisierungsdaten unmittelbar unter Angabe der Rahmennummer beim Sender zur Wiederholung anzufordern. Wie bereits oben angedeutet, führt bei komplexen Übertragungssystemen nach dem Stand der Technik der zeitliche, oft auch schwankende Versatz zwischen dem Senden eines Rahmens und dem Eintreffen einer Wiederholanforderung dazu, daß der Sender auf aufwendige Weise überwachen muß, welche Rahmen fehlerfrei empfangen wurden und welche wiederholt werden müssen. Je nachdem, wie diese Überwachung durchgeführt wird, kommt es sogar zu unnötigen Wiederholungen von bereits fehlerfrei empfangenen Rahmen. Mit Hilfe der erfindungsgemäßen Rahmenstruktur ist es möglich, die beim Sender erforderliche Intelligenz zu verringern und unnötige Wiederholungen zu vermeiden.

Es sei abschließend darauf hingewiesen, daß die Verwendung der Begriffe "Sender" und "Empfänger" nicht implizieren soll, daß es sich notwendigerweise um eine Simplex-Datenübertragung handelt. Vielmehr sind die Begriffe beliebige Sende-Empfangseinrichtungen auszudehnen. Eine Duplex-Datenübertragung, wie sie z. B. der GSM-Mobilfunk-Standard beschreibt, ist daher ebenfalls für die Verwendung der erfindungsgemäßen Rahmenstruktur geeignet.

## Patentansprüche

1. Digitales Datenübertragungssystem (100) mit einem Sender (102) und einem Empfänger (104), bei dem die zwischen dem Sender und dem Empfänger zu übertragenden digitalen Daten in Rahmen (107) strukturiert sind und bei dem jeder Rahmen eine Rahmennummer enthält (108),
**dadurch gekennzeichnet** , daß jeder Rahmen (107) Prüf-Bits enthält (109), mittels derer der Empfänger überprüft, ob die empfangene Rahmennummer (108) fehlerfrei ist.

2. Digitales Datenübertragungssystem nach Anspruch 1, dadurch gekennzeichnet, daß jeder Rahmen Korrektur-Bits enthält, die ausschließlich der Korrektur fehlerhaft empfangener Rahmennummern dienen.

3. Sender (102) für eine digitale Datenübertragung, der die zu übertragenden digitalen Daten in Rahmen (107) strukturiert, die jeweils eine Rahmennummer (108) enthalten,
**dadurch gekennzeichnet**, daß der Sender jedem Rahmen (107) Prüf-Bits (109) hinzufügt, mittels derer ein Empfänger überprüft, ob er die Rahmennummer (108) fehlerfrei empfängt.

4. Sender (102) nach Anspruch 3, dadurch gekennzeichnet, daß der Sender jedem der gesendeten Rahmen Korrektur-Bits hinzufügt, die ausschließlich der Korrektur fehlerhaft empfangener Rahmennummern dienen.

5. Empfänger (104) für eine digitale Datenübertragung, bei der die zu übertragenden digitalen Daten in Rahmen (107) strukturiert sind, die jeweils eine Rahmennummer (108) enthalten,
**dadurch gekennzeichnet**, daß der Empfänger in den empfangenen Rahmen (107) enthaltene Prüf-Bits (109) auswertet (105), um zu überprüfen, ob er die Rahmennummer (108) fehlerfrei empfängt.

6. Empfänger (104) nach Anspruch 5, dadurch gekennzeichnet, daß der Empfänger in den Rahmen enthaltene Korrektur-Bits auswertet, um fehlerhaft empfangene Rahmennummern an sich zu korrigieren.

7. Empfänger nach den Ansprüchen 5 oder 6, dadurch gekennzeichnet, daß
- der Empfänger Mittel hat, mit denen er prüft, ob er in Rahmen enthaltene Nutzdaten fehlerfrei empfängt,
- und der Empfänger Speicher hat, in denen mindestens drei Rahmen, deren Nutzdaten er fehlerhaft und deren Rahmennummer er fehlerfrei empfängt, unter der gleichen Rahmennummer abgelegt werden können,
- und der Empfänger einen Majoritätsvergleicher hat, der dann, wenn die Zahl der in den Speichern abgelegten Rahmen gleicher Rahmennummmer einen vorab festgelegten Wert erreicht, diese Rahmen (302, 303, 304) einem Majoritätsvergleich unterwirft und aus diesem Vergleich einen neuen Rahmen (305) mit gleicher Rahmennummer ermittelt,
- und der Empfänger den durch den Majoritätsvergleich ermittelten neuen Rahmen daraufhin überprüft, ob die darin enthaltenen Nutzdaten fehlerfrei sind.

8. Empfänger nach Anspruch 7, dadurch gekennzeichnet, daß der Empfänger dem Sender eine Wiederholanforderung sendet, falls die Nutzdaten eines empfangenen Rahmens fehlerhaft sind.

9. Empfänger nach Anspruch 8, dadurch gekennzeichnet, daß der Empfänger dem Sender eine Wiederholanforderung sendet, falls die Nutzdaten eines durch den Majoritätsvergleich ermittelten Rahmens fehlerhaft sind.

10. Verfahren (400) zur Übertragung digitaler Daten mit folgenden Schritten:
a) die zu übertragenden Daten werden von einem Sender in Rahmen (107) strukturiert;
b) der Sender ordnet in jedem Rahmen eine Rahmennummer (108) an;
c) der Sender ordnet in jedem Rahmen Prüf-Bits (109) an;
d) ein Empfänger wertet in den empfangenen Rahmen enthaltenen Prüf-Bits (109) aus, um zu überprüfen, ob er die Rahmennummer (108) fehlerfrei empfängt (405).

11. Verfahren (400) nach Anspruch 10, dadurch gekennzeichnet, daß der Sender in jedem Rahmen zusätzliche Korrektur-Bits anordnet und daß der Empfänger diese Korrektur-Bits auswertet (402), um fehlerhaft empfangene Rahmennummern an sich zu korrigieren.

12. Verfahren (400) nach den Ansprüchen 10 oder 11, dadurch gekennzeichnet, daß
- der Empfänger Rahmen, deren Nutzdaten er fehlerhaft und deren Rahmennummer er fehlerfrei empfängt, unter der gleichen Rahmennummer abspeichert (410),
- und der Empfänger dann, wenn die Zahl dieser abgespeicherten Rahmen gleicher Rahmennummmer einen vorab festgelegten Wert erreicht (411), diese Rahmen einem Majoritätsvergleich unterwirft (412) und aus diesem Vergleich einen neuen Rahmen mit gleicher Rahmennummer ermittelt,
- und der Empfänger die durch den Majoritätsvergleich ermittelten Rahmen daraufhin überprüft, ob die darin enthaltenen Nutzdaten fehlerfrei sind (414).

13. Verfahren (400) nach Anspruch 12, dadurch gekennzeichnet, daß
- der Sender die strukturierten Rahmen nacheinander sendet,
- und der Empfänger dem Sender eine Wiederholanforderung sendet, falls die Nutzdaten eines empfangenen Rahmens fehlerhaft sind,
- und der Sender vom Empfänger angeforderte Rahmen erneut sendet.

14. Verfahren nach Anspruch 13, dadurch gekennzeichnet, daß der Empfänger dem Sender eine Wiederholanforderung sendet, falls die Nutzdaten des durch den Majoritätsvergleich ermittelten Rahmens fehlerhaft sind.
